# EUROPÄISCHE PATENTSCHRIFT

(11) **EP 1 593 299 B1**
(45) Veröffentlichungstag und Bekanntmachung des Hinweises auf die Patenterteilung: **13.04.2016**
(21) Anmeldenummer: 05103616.8
(22) Anmeldetag: 02.05.2005
(51) Int. Cl.: A01F 15/08, A01F 15/07

(54) **Rundballenpresse**
Rotobaler
Presse à balles rondes

(30) Priorität: 08.05.2004 DE 102004022801
(43) Veröffentlichungstag der Anmeldung: 09.11.2005
(73) Patentinhaber: Deere & Company, Moline, IL 61265 (US)
(72) Erfinder: Biziorek, Stephane, 70600, Champlitte (FR); Guiet, Lionel, 70100, Gray (FR); Humbert, Clément, 25720, Arguel (FR)
(74) Vertreter: Holst, Sönke

(56) Entgegenhaltungen:
- EP-A1- 1 266 563
- DE-A1- 2 443 838
- DE-A1- 10 303 201
- US-A- 4 389 930
- US-A- 4 624 179
- US-A- 4 855 924
- US-A- 5 631 826
- US-A1- 2003 024 407
- US-B2- 6 622 455

## Beschreibung

Die Erfindung betrifft eine Rundballenpresse mit einem Ballenpressraum, einer im rückwärtigen Bereich des Ballenpressraums angeordneten Tür, die entlang eines Weges zwischen einer Schließposition, in der sich die Tür entlang der Rückseite des Ballenpressraums erstreckt, und einer Öffnungsposition beweglich ist, in der ein fertiggestellter Ballen aus dem Ballenpressraum auswerfbar ist, und mit einem mit einer Steuerung verbundenen Sensor zur Bereitstellung einer Information über die Position der Tür entlang des Weges.

Rundballenpressen finden Verwendung, um aus halmförmigem landwirtschaftlichen Emtegut Ballen herzustellen. Derartige Rundballenpressen weisen einen Ballenpressraum und zugehörige Pressmittel auf. Nach Fertigstellung eines Ballens schwenkt bei bekannten Rundballenpressen eine rückwärtige Tür nach oben, um den Ballen auszuwerfen.

Im Stand der Technik ist es bekannt, der Tür einen Sensor zuzuordnen, um eine Information zu bekommen, ob die Tür geschlossen ist oder nicht, und dem Bediener eines die Rundballenpresse ziehenden Traktors eine entsprechende Information zu geben (US 4 855 924 A, DE 44 42 479 C) oder selbsttätig gesteuerte Funktionen der Rundballenpresse zu kontrollieren (US 5 231 828 A) oder eine nachfolgende Wickeleinrichtung zu steuern (DE 19919 322 A, DE 19919 323 A) oder angetriebene Elemente der Rundballenpresse aus Sicherheitsgründen anzuhalten, wenn die Tür von Hand geöffnet wird (DE 101 07 625 A). Eine über die binäre Information, ob die Tür geöffnet ist oder nicht, hinausgehende Information über die Position der Tür können die bekannten Sensoren nicht bereitstellen. Eine derartige Information kann aber für verschiedene Zwecke sinnvoll sein.

In der US 5 802 825 A wird eine Rundballenpresse mit einem Sensor für die Ballengröße beschrieben, der als Potentiometer ausgeführt ist. Eine Anregung, mit einem derartigen Potentiometer die Position der rückwärtigen Tür der Rundballenpresse zu erfassen, wird nicht gegeben.

Die EP 1 266 563 A1 zeigt eine Kombination aus einer Ballenpresse und einem Ballenwickler. Ein Sensor wirkt mit der Tür der Ballenpresse zusammen und gibt bei Erreichen eines Öffnungswinkels von 20° ein Signal aus, das zur Verstellung einer Rampe und eines Wickeltisches dient.

Die auf die vorliegende Anmelderin zurückgehende, nachveröffentlichte DE 103 39 652 A beschreibt eine Rundballenpresse mit einer Tür, die durch einen hydraulischen Antrieb aktiv bewegt wird. Die Geschwindigkeit der Bewegung kann von der jeweiligen Position der Tür abhängen. Ein Sensor zu Erfassung der Position der Tür wird nicht explizit erwähnt.

Dokument US 4624179 offenbart eine Rundballenpresse mit allen Merkmalen aus dem Oberbegriff vom Anspruch 1.

Das der Erfindung zu Grunde liegende Problem wird darin gesehen, eine Rundballenpresse bereitzustellen, bei der die oben erwähnten Nachteile nicht oder in einem verminderten Maß vorliegen.

Dieses Problem wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Es wird vorgeschlagen, den Sensor zur Erfassung der Position der Tür derart zu gestalten, dass er auch einen, mehrere oder beliebig viele Zwischenwerte der Position der Tür bei ihrer Bewegung entlang ihres Wegs zwischen der Öffnungs- und Schließposition erfassen und signalisieren kann. Man erhält somit nicht nur eine binäre, sondern eine im Informationsgehalt darüber hinaus gehende, genauere Information über die Position der Tür.

Der Sensor ist mit einer Steuerung verbunden, die einen Aktor steuert, der zur Verstellung der Position der Tür eingerichtet ist. Die Steuerung kontrolliert den Aktor abhängig vom Signalwert des Sensors. Dadurch bewegt sich der Aktor mit einer Geschwindigkeit, die von der jeweiligen Position der Tür abhängt. So kann die Tür in einer sich anfangs beschleunigenden und zum Ende hin verzögernden Bewegung geöffnet bzw. geschlossen werden. Die Steuerung kann die zugehörige Geschwindigkeit aus Tabellen entnehmen, in der die Geschwindigkeiten abhängig von der Position der Tür abgespeichert sind. Diese Tabellen sind vorzugsweise mit einer hinreichend hohen Auflösung versehen, bei der abrupte Beschleunigungsvorgänge nicht zu befürchten sind.

Ein fertiger oder fast fertiger Ballen übt eine Kraft auf die Tür aus und kann sie gegen eine Vorspannkraft, die durch das Gewicht der Tür und möglicherweise zusätzliche Vorspannelemente, wie Federn oder Hydraulikzylinder, auch teilweise öffnen oder sogar vollständig in die Öffnungsposition verbringen. Der Nachweis der Bewegung der Tür durch den Sensor ermöglicht es, der Steuerung eine Information über die Fertigstellung des Ballens bereitzustellen und dem Bediener der Ballenpresse bzw. eines sie ziehenden Traktors entsprechend zu informieren. Alternativ oder zusätzlich kann das Signal des Sensors Mittel zur Umhüllung des Ballens aktivieren und/oder eine selbsttätige Öffnung der Tür durch Aktoren veranlassen. Durch die geöffnete Tür wird der Ballen auf den Erdboden abgelegt oder an eine Wickeleinrichtung überführt.

Beim nachfolgenden Schließen der Tür kann die Steuerung anhand des Signals des Sensors feststellen, ob die Tür korrekt geschlossen wurde. Ist das nicht der Fall, weil beispielsweise ein Ballen sich zwischen der Tür und der Rundballenpresse verklemmt hat, wird dem Bediener eine entsprechende Information gegeben.

Bei Rundballenpressen mit variablem Presskammervolumen ist die Größe des Ballens vorgebbar. Die Tür wird bisher unabhängig von der Größe des Ballens in die weitest mögliche Öffnungsposition verbracht. Bei kleineren Ballen, die beispielsweise aus Silage hergestellt sind, bedeutet das einen unnötigen Zeitverlust. Es bietet sich daher bei Rundballenpressen mit variablem Presskammervolumen an, die Tür in eine Öffnungsposition zu verbringen, die auf der Größe des Ballens basiert. Mit dem erfindungsgemäßen Sensor wird erfasst, ob diese Öffnungsposition erreicht wurde und der Öffnungsvorgang wird dann abgebrochen.

Bei der Bildung eines Ballens drückt der entstehende Ballen gegen die Tür. Ordnet man beiden gegenüberliegenden Seiten der Tür, an denen sie sich öffnet, jeweils einen Sensor zu, besteht die Möglichkeit, anhand eventueller Unterschiede der Messwerte der Sensoren eine Information über die Form des jeweiligen Ballens zu generieren. Hat der Ballen demnach auf einer Seite einen größeren Durchmesser als auf der anderen Seite, kann diese Information an den Bediener eines die Ballenpresse ziehenden Traktors gegeben werden, z. B. über eine Anzeigevorrichtung oder eine Sprachausgabe, damit er den Traktor derart lenken kann, dass der Unterschied kleiner wird. Alternativ oder zusätzlich wird anhand der Messwerte der Sensoren eine geeignete Lenkrichtung berechnet und einer selbsttätigen Lenkeinrichtung zugeführt. Die Sensoren auf beiden Seiten der Tür können jedoch beispielsweise auf Grund der Bereitstellung von Redundanz auch ohne Bestimmung der Form des Ballens sinnvoll sein.

Der Sensor ist in einer Ausführungsform der Erfindung eingerichtet, den Abstand zwischen einem Bereich der Tür und einem sich nicht mit der Tür bewegenden Bereich der Rundballenpresse zu erfassen.

Bei einer anderen Ausführungsform erfasst der Sensor den Abstand zwischen der Tür, die um eine horizontale, quer zur Fahrtrichtung verlaufende Achse nach oben verschwenkbar oder in anderer Weise in vertikaler Richtung bewegbar ist, z. B. verschiebbar, und dem Erdboden. Bei beiden Ausführungsformen kann ein berührungslos arbeitender Entfernungssensor zur Anwendung kommen, z. B. ein Ultraschall- oder Laserentfernungsmesser.

Der Sensor kann digitale oder analoge Ausgangssignale abgeben; letztere werden vorzugsweise digitalisiert, um sie mit einer digitalen Steuerung verarbeiten zu können. In Frage kommen beispielsweise Potentiometer, Ultraschallsensoren oder Näherungssensoren.

Ein Beispiel wäre ein Sensor, der den Drehwinkel der Tür um eine Schwenkachse erfasst, um welche sie sich zwischen der Öffnungs- und Schließposition bewegt.

Ein anderes Beispiel ist ein Sensor, der die Position eines Aktors erfasst, der die Tür zwischen der Öffnungs- und Schließposition bewegt.

Dabei kann der Sensor Elemente aufweisen, die alle oder zum Teil im Gehäuse des Aktors angeordnet sind, wie ein Dreh- oder Schiebe-Potentiometer oder ein Permanentmagnet, dessen Position durch geeignete Sensoren außerhalb des Gehäuses erfasst wird.

Auch besteht die Möglichkeit, die Menge des dem Aktor zugeführten Fremdkraftbetätigungsmittels zu erfassen, z. B. das Fluid, das einem als Hydraulikzylinder ausgeführten Aktor zugeführt wird oder von ihm abfließt, und daraus eine Information über dessen Position abzuleiten. Bei einem Schrittmotor kann die Anzahl der zugeführten Impulse erfasst werden.

Weiterhin kann als Sensor eine Lichtschranke verwendet werden, die mit einem Lochelement, einer so genannten Kodierscheibe, zusammenwirkt. Hier sind an sich bekannte Mittel zur Feststellung der Bewegungsrichtung vorzusehen, z. B. Schalter oder eine geeignete Form des Lochelements. Derartige Lichtschranken können als sogenannte smarte Lagerungen ausgeführt sein, d. h. räumlich in ein Lager integriert werden.

Eine relativ kostengünstige Möglichkeit wird darin gesehen, eine Anzahl von Sensoren entlang des Wegs der Tür zu verteilen. Sie werden durch ein Element der Tür angesteuert, wenn es sich in ihrer Nähe befindet. Es können beispielsweise mechanische Schalter (z. B. Mikroschalter) oder induktive Näherungsschalter verwendet werden.

Die Bewegung der Tür kann durch geeignete Übersetzungsgetriebe unter- oder übersetzt werden, um den Bewegungsbereich der Tür an den Bewegungsbereich des Sensors anzupassen. Ein Beispiel wäre ein Hebelgetriebe.

Schließlich wird vorgeschlagen, einen Dehnungssensor zur Erfassung der Verformung der Tür als Sensor für ihre Position zu verwenden. Eine geschlossene Tür ist in der Regel weniger verformt als eine geöffnete Tür. Diese Verformung wird durch den Dehnungssensor, der beispielsweise ein Dehnungsmessstreifen sein kann, erfasst.

In der Zeichnung ist ein nachfolgend näher beschriebenes Ausführungsbeispiel der Erfindung dargestellt. Sie zeigt eine erfindungsgemäße Rundballenpresse mit geöffneter Tür in Seitenansicht und schematischer Darstellung.

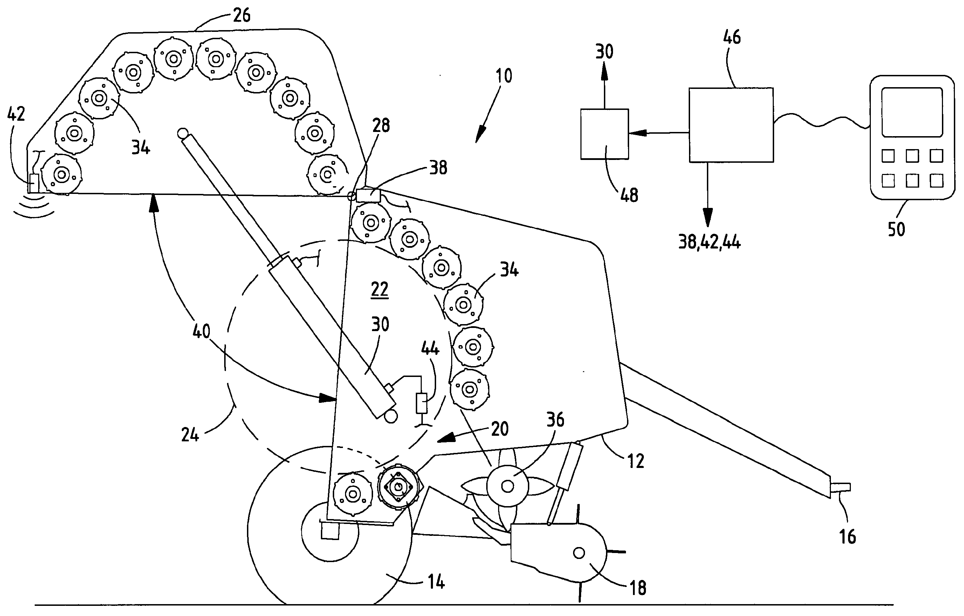

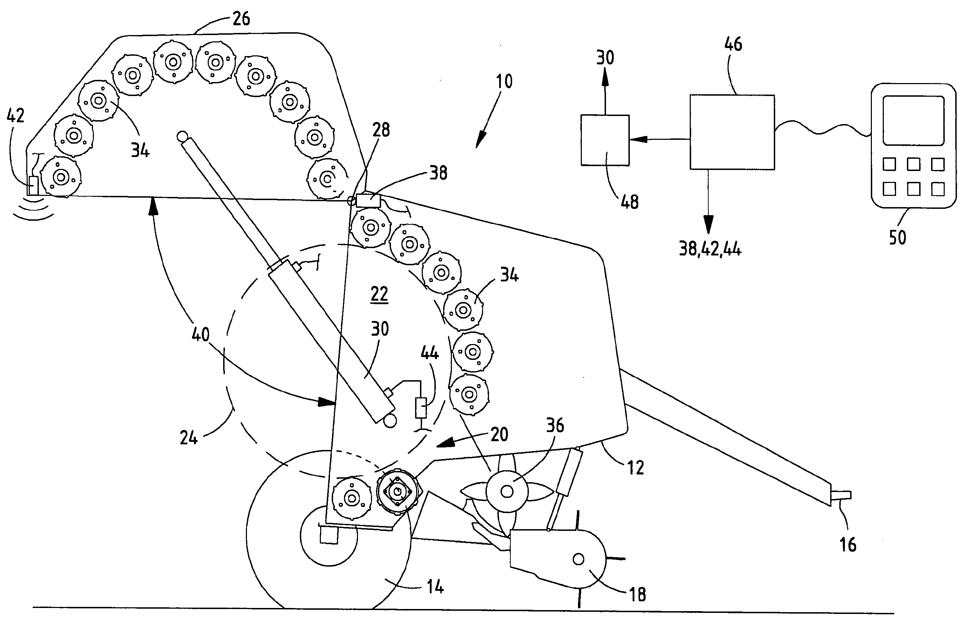

In der einzigen Figur ist eine Ausführungsform einer Rundballenpresse 10 dargestellt, die einen Rahmen 12 aufweist, der sich auf zwei Rädern 14 abstützt. An der Vorderseite des Rahmens 14 ist eine Deichsel 16 angeordnet, um die Rundballenpresse 10 an einem Traktor anhängen und über ein Feld ziehen zu können. Im Erntebetrieb bewegt sich die Rundballenpresse 10 in der Figur 1 nach rechts. Eine Aufnahmevorrichtung 18 in Form einer Pick-Up dient zur Aufnahme von auf dem Boden liegenden Erntegut, z. B. in einem Schwad abgelegten Heu oder Stroh. Das von der Aufnahmevorrichtung 18 aufgenommene Erntegut wird durch einen Förderrotor 36 dem Einlass 20 eines Ballenpressraums 22 zugeführt und dort spiralförmig zu einem rund-zylindrischen Ballen 24 aufgerollt, gebunden und anschließend auf den Boden abgelegt oder an eine Wickeleinrichtung (nicht gezeigt) überführt.

Die Rundballenpresse 10 weist eine rückwärtige Tür 26 auf, die um eine horizontal und quer zur Fahrtrichtung verlaufende Achse 28 an der Oberseite der Ballenpresse verschwenkbar angelenkt ist. Die Tür 26 ist in der Figur in ihrer Öffnungsposition dargestellt. Sie kann durch einen Aktor 30 zwischen der dargestellten Öffnungsposition und einer Schließposition bewegt werden, in der sie den Ballenpressraum 22 nach hinten verschließt. Sie wird dazu in der Figur um die Achse 28 im Gegenuhrzeigersinn gedreht.

Der Ballenpressraum 22 wird in der dargestellten Ausführungsform durch antreibbare Walzen 34 umschlossen; es handelt sich demnach um eine Rundballenpresse mit festem Presskammervolumen. Es könnte sich genauso gut um eine Rundballenpresse mit variablem Presskammervolumen handeln, dann würde der Ballenpressraum von antreibbaren Riemen oder dgl. umschlossen.

Erfindungsgemäß sind einige Sensoren zur Erfassung der aktuellen Position der Tür 26 vorgesehen. Ein erster Sensor 38 in Form eines Drehpotentiometers erfasst den Drehwinkel der Tür 26 um die Achse 28 an der in Fahrtrichtung rechten Seite der Rundballenpresse 10. Ein weiterer derartiger Sensor (nicht dargestellt) in Form eines Drehpotentiometers erfasst den Drehwinkel 40 der Tür 26 um die Achse 28 an der in Fahrtrichtung linken Seite der Rundballenpresse 10. Ein dritter Sensor 42 in Form eines Ultraschallentfernungsmessers erfasst den Abstand zwischen dem rückwärtigen (in der Schließposition unteren) Ende der Tür 26 und dem Erdboden. Der Sensor 42 beruht vorzugsweise auf einem Laufzeitprinzip. Er könnte auch mit einem als Referenz dienenden Reflektor zusammenwirken, der an einem sich nicht mit der Tür 26 bewegenden Element der Rundballenpresse 10 befestigt ist, z. B. an der Achse oder am rückwärtigen Ende des Ballenpressraums 22.

Der Aktor 30 ist ein doppelt wirkender Hydraulikzylinder, der kolbenseitig am Rahmen 12 und kolbenstangenseitig an der Tür 26 angelenkt ist. In der zur Kolbenkammer des Aktors 30 führenden Leitung ist ein vierter Sensor 44 in Form eines Flusssensors angeordnet. Anhand der Menge des in die Kolbenkammer fließenden oder daraus abfließenden Hydraulikfluids kann eine Information über die Position des Kolbens des Aktors 30 und somit über die Position der Tür 26 gewonnen werden.

Die Sensoren 38, 42 und 44 sind mit einer elektronischen Steuerung 46 verbunden, vorzugsweise über einen Bus oder direkt über elektrische Kabel bzw. Lichtleiter. Die Steuerung 46 kann sich physisch auf der Rundballenpresse 10 oder an Bord eines Traktors oder anderen Zugfahrzeugs befinden, das die Ballenpresse zieht und ihre beweglichen Elemente mit elektrischer und/oder mechanischer und/oder hydraulischer Antriebsleistung versorgt. Die Steuerung 46 kontrolliert eine Ventileinrichtung 48, die ihrerseits hydraulisch durch zwei Leitungen mit den beiden Kammern des Aktors 30 verbunden ist. Weiterhin ist die Steuerung 46 elektrisch mit einer Eingabe- und Anzeigeeinrichtung 50 verbunden, die sich im Sichtbereich des Bedieners im Traktor befindet. Die Eingabe- und Anzeigeeinrichtung 50 ist vorzugsweise ISO-konform und somit durch einen Bus mit der Steuerung 46 verbunden.

Die Arbeitsweise der Rundballenpresse 10 ist folgendermaßen. Beim Aufnehmen von Erntegut, z. b. Heu oder Stroh, entsteht im Ballenpressraum 22 ein Ballen 24 wachsender Größe. Die Tür 26 wird durch ihr eigenes Gewicht in der Schließposition gehalten, wobei beide Kammern des Aktors 30 drucklos gehalten werden. Sobald der Ballen 24 eine gewisse Größe erreicht hat, drückt er die an der Innenseite der Tür 26 gelagerten Walzen 34 nach hinten und oben. Übersteigt die zugehörige Kraft die Gewichtskraft der Tür 26, fängt letztere an, sich um die Achse 28 im Uhrzeigersinn zu drehen. Um eine gewünschte Packungsdichte des Ballens 24 zu erhalten, könnte man in der Ballenbildungsphase auch die Kolbenstangenkammer des Aktors 30 mit einem bestimmten Druck beaufschlagen, um die Tür 26 mit einer größeren Vorspannkraft zu beaufschlagen. Der Druck in der Kolbenstangenkammer des Aktors 30 kann durch den Bediener über die Eingabe- und Anzeigeeinrichtung 50 eingegeben und über die Steuerung 46 und die Ventileinrichtung 48 gesteuert werden.

Sobald sich die Tür 26 bewegt, erhält die Steuerung 46 entsprechende Signale von den Sensoren 38 an beiden Seiten der Rundballenpresse 10. Diese Signale werden als Hinweis, dass der Ballen 24 fertiggestellt ist, aufgefasst und über die Eingabe- und Anzeigeeinrichtung 50 wird eine entsprechende Information an den Bediener gegeben. Er unterbricht dann die Fahrt. In der Zeichnung nicht dargestellte Mittel umwickeln dann den Ballen 24 mit einem Band, Netz oder einer Folie. Weisen die Signale der Sensoren 38 an beiden Seiten der Rundballenpresse 10 auf unterschiedliche Öffnungswinkel 40 an beiden Seiten der Tür 26 hin, was auf einen ungleichmäßigen Ballen hindeutet, wird dieses dem Bediener auf der Eingabe- und Anzeigeeinrichtung 50 signalisiert. Er kann dann im weiteren Arbeitsverlauf entsprechend gegenlenken, damit das Erntegut möglichst mittig in die Aufnahmevorrichtung 18 einläuft.

Nach der Fertigstellung des Ballens 24 ist letzterer auf den Boden oder eine nicht dargestellte Wickeleinrichtung auszuwerfen. Dazu ist die Tür 26 in die Öffnungsposition zu verbringen. Die Öffnung der Tür 26 erfolgt durch den Aktor 30, gesteuert durch die Steuerung 46 und die Ventileinrichtung 48. Die Sensoren 38, 42 und 44 stellen der Steuerung 46 Rückkopplungsinformationen über die aktuelle Position der Tür 26 entlang ihres Wegs zwischen der Schließposition und der Öffnungsposition zur Verfügung. Der Öffnungsvorgang kann somit basierend auf den Positionsinformationen der Sensoren 38, 42 und 46 derart erfolgen, dass die Tür - vorzugsweise basierend auf einer softwaremäßig abgelegten Tabelle - am Anfang der Öffnungsbewegung relativ langsam, im mittleren Bereich relativ schnell und zum Ende der Öffnungsbewegung hin wieder relativ langsam erfolgt. Die Sensoren 38, 42 und 44 stellen eine Redundanz für den Fall, dass einer der Sensoren ausfällt, bereit, und ermöglichen auch eine gegenseitige Funktionskontrolle. Nach dem Auswerfen des Ballens 24 wird die Tür 26 in analoger Weise wieder geschlossen.

Die Erfassung der Position der Tür 26 durch die Sensoren 38, 42 und 44 ermöglicht im Ergebnis eine verbesserte Kontrolle nicht nur der Tür 26, sondern der Rundballenpresse 10 insgesamt.

Die Erfindung betrifft eine Rundballenpresse mit einem Ballenpressraum, einer im rückwärtigen Bereich des Ballenpressraums angeordneten Tür, die entlang eines Weges zwischen einer Schließposition, in der sich die Tür entlang der Rückseite des Ballenpressraums erstreckt, und einer Öffnungsposition beweglich ist, in der ein fertiggestellter Ballen aus dem Ballenpressraum auswerfbar ist, und mit einem Sensor zur Bereitstellung einer Information über die Position der Tür entlang des Weges, wobei die Rundballenpresse ein variables Presskammervolumen hat.

Rundballenpressen finden Verwendung, um aus halmförmigem landwirtschaftlichen Erntegut Ballen herzustellen. Derartige Rundballenpressen weisen einen Ballenpressraum und zugehörige Pressmittel auf. Nach Fertigstellung eines Ballens schwenkt bei bekannten Rundballenpressen eine rückwärtige Tür nach oben, um den Ballen auszuwerfen.

Im Stand der Technik ist es bekannt, der Tür einen Sensor zuzuordnen, um eine Information zu bekommen, ob die Tür geschlossen ist oder nicht, und dem Bediener eines die Rundballenpresse ziehenden Traktors eine entsprechende Information zu geben (US 4 855 924 A, DE 44 42 479 C) oder selbsttätig gesteuerte Funktionen der Rundballenpresse zu kontrollieren (US 5 231 828 A) oder eine nachfolgende Wickeleinrichtung zu steuern (DE 199 19 322 A, DE 199 19 323 A) oder angetriebene Elemente der Rundballenpresse aus Sicherheitsgründen anzuhalten, wenn die Tür von Hand geöffnet wird (DE 101 07 625 A). Eine über die binäre Information, ob die Tür geöffnet ist oder nicht, hinausgehende Information über die Position der Tür können die bekannten Sensoren nicht bereitstellen. Eine derartige Information kann aber für verschiedene Zwecke sinnvoll sein.

In der US 5 802 825 A wird eine Rundballenpresse mit einem Sensor für die Ballengröße beschrieben, der als Potentiometer ausgeführt ist. Eine Anregung, mit einem derartigen Potentiometer die Position der rückwärtigen Tür der Rundballenpresse zu erfassen, wird nicht gegeben.

Die auf die vorliegende Anmelderin zurückgehende, nachveröffentlichte EP 1 512 320 A beschreibt eine Rundballenpresse mit einer Tür, die durch einen hydraulischen Antrieb aktiv bewegt wird. Die Geschwindigkeit der Bewegung kann von der jeweiligen Position der Tür abhängen. Ein Sensor zu Erfassung der Position der Tür wird nicht explizit erwähnt.

Die ebenfalls nachveröffentlichte EP 1 444 882 A beschreibt eine Ballenpresse mit einem Vordergehäuse und einem gegenüber dem Vordergehäuse in eine Öffnungsposition verschwenkbaren Hintergehäuse. Koaxial zur Schwenkachse des Hintergehäuses ist ein Potentiometer vorgesehen, das einer Steuereinrichtung eine Information über die Position des Hintergehäuses gegenüber dem Vordergehäuse signalisiert. Die Steuerung kontrolliert einen das Hintergehäuse verschwenkenden Aktor basierend auf dem Signal des Potentiometers derart, dass die Bewegung zum Ende hin verlangsamt abläuft.

Die EP 1 266 563 A1 zeigt eine Kombination aus einer Ballenpresse und einem Ballenwickler. Ein Sensor wirkt mit der Tür der Ballenpresse zusammen und gibt bei Erreichen eines Öffnungswinkels von 20° ein Signal aus, das zur Verstellung einer Rampe und eines Wickeltisches dienst.

Dokument US 4624179 offenbart eine Rundballenpresse mit allen Merkmalen aus dem Oberbegriff vom Anspruch 1.

Das der Erfindung zu Grunde liegende Problem wird darin gesehen, eine Rundballenpresse bereitzustellen, bei der die oben erwähnten Nachteile nicht oder in einem verminderten Maß vorliegen.

Dieses Problem wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Der Sensor zur Erfassung der Position der Tür ist derart gestaltet, dass er auch einen, mehrere oder beliebig viele Zwischenwerte der Position der Tür bei ihrer Bewegung entlang ihres Wegs zwischen der Öffnungs- und Schließposition erfassen und signalisieren kann. Man erhält somit nicht nur eine binäre, sondern eine im Informationsgehalt darüber hinaus gehende, genauere Information über die Position der Tür.

Bei Rundballenpressen mit variablem Presskammervolumen ist die Größe des Ballens vorgebbar. Die Tür wird bisher unabhängig von der Größe des Ballens in die weitest mögliche Öffnungsposition verbracht. Bei kleineren Ballen, die beispielsweise aus Silage hergestellt sind, bedeutet das einen unnötigen Zeitverlust. Bei der erfindungsgemäßen Rundballenpresse mit variablem Presskammervolumen wird die Tür in eine Öffnungsposition verbracht, die auf der Größe des Ballens basiert. Mit dem erfindungsgemäßen Sensor wird erfasst, ob diese Öffnungsposition erreicht wurde und der Öffnungsvorgang wird dann abgebrochen.

Vorzugsweise wird der Sensor mit einer Steuerung verbunden, die einen Aktor steuert, der zur Verstellung der Position der Tür eingerichtet ist. Die Steuerung kontrolliert den Aktor abhängig vom Signalwert des Sensors. Dadurch besteht u. a. die Möglichkeit, den Aktor sich mit einer Geschwindigkeit bewegen zu lassen, die von der jeweiligen Position der Tür abhängt. So kann die Tür in einer sich anfangs beschleunigenden und zum Ende hin verzögernden Bewegung geöffnet bzw. geschlossen werden. Die Steuerung kann die zugehörige Geschwindigkeit aus Tabellen entnehmen, in der die Geschwindigkeiten abhängig von der Position der Tür abgespeichert sind. Diese Tabellen sind vorzugsweise mit einer hinreichend hohen Auflösung versehen, bei der abrupte Beschleunigungsvorgänge nicht zu befürchten sind.

Ein fertiger oder fast fertiger Ballen übt eine Kraft auf die Tür aus und kann sie gegen eine Vorspannkraft, die durch das Gewicht der Tür und möglicherweise zusätzliche Vorspannelemente, wie Federn oder Hydraulikzylinder, auch teilweise öffnen oder sogar vollständig in die Öffnungsposition verbringen. Der Nachweis der Bewegung der Tür durch den Sensor ermöglicht es, der Steuerung eine Information über die Fertigstellung des Ballens bereitzustellen und dem Bediener der Ballenpresse bzw. eines sie ziehenden Traktors entsprechend zu informieren. Alternativ oder zusätzlich kann das Signal des Sensors Mittel zur Umhüllung des Ballens aktivieren und/oder eine selbsttätige Öffnung der Tür durch Aktoren veranlassen. Durch die geöffnete Tür wird der Ballen auf den Erdboden abgelegt oder an eine Wickeleinrichtung überführt.

Beim nachfolgenden Schließen der Tür kann die Steuerung anhand des Signals des Sensors feststellen, ob die Tür korrekt geschlossen wurde. Ist das nicht der Fall, weil beispielsweise ein Ballen sich zwischen der Tür und der Rundballenpresse verklemmt hat, wird dem Bediener eine entsprechende Information gegeben.

Bei der Bildung eines Ballens drückt der entstehende Ballen gegen die Tür. Ordnet man beiden gegenüberliegenden Seiten der Tür, an denen sie sich öffnet, jeweils einen Sensor zu, besteht die Möglichkeit, anhand eventueller Unterschiede der Messwerte der Sensoren eine Information über die Form des jeweiligen Ballens zu generieren. Hat der Ballen demnach auf einer Seite einen größeren Durchmesser als auf der anderen Seite, kann diese Information an den Bediener eines die Ballenpresse ziehenden Traktors gegeben werden, z. B. über eine Anzeigevorrichtung oder eine Sprachausgabe, damit er den Traktor derart lenken kann, dass der Unterschied kleiner wird. Alternativ oder zusätzlich wird anhand der Messwerte der Sensoren eine geeignete Lenkrichtung berechnet und einer selbsttätigen Lenkeinrichtung zugeführt. Die Sensoren auf beiden Seiten der Tür können jedoch beispielsweise auf Grund der Bereitstellung von Redundanz auch ohne Bestimmung der Form des Ballens sinnvoll sein.

Der Sensor ist in einer Ausführungsform der Erfindung eingerichtet, den Abstand zwischen einem Bereich der Tür und einem sich nicht mit der Tür bewegenden Bereich der Rundballenpresse zu erfassen.

Bei einer anderen Ausführungsform erfasst der Sensor den Abstand zwischen der Tür, die um eine horizontale, quer zur Fahrtrichtung verlaufende Achse nach oben verschwenkbar oder in anderer Weise in vertikaler Richtung bewegbar ist, z. B. verschiebbar, und dem Erdboden. Bei beiden Ausführungsformen kann ein berührungslos arbeitender Entfernungssensor zur Anwendung kommen, z. B. ein Ultraschall- oder Laserentfernungsmesser.

Der Sensor kann digitale oder analoge Ausgangssignale abgeben; letztere werden vorzugsweise digitalisiert, um sie mit einer digitalen Steuerung verarbeiten zu können. In Frage kommen beispielsweise Potentiometer, Ultraschallsensoren oder Näherungssensoren.

Ein Beispiel wäre ein Sensor, der den Drehwinkel der Tür um eine Schwenkachse erfasst, um welche sie sich zwischen der Öffnungs- und Schließposition bewegt.

Ein anderes Beispiel ist ein Sensor, der die Position eines Aktors erfasst, der die Tür zwischen der Öffnungs- und Schließposition bewegt.

Dabei kann der Sensor Elemente aufweisen, die alle oder zum Teil im Gehäuse des Aktors angeordnet sind, wie ein Dreh- oder Schiebe-Potentiometer oder ein Permanentmagnet, dessen Position durch geeignete Sensoren außerhalb des Gehäuses erfasst wird.

Auch besteht die Möglichkeit, die Menge des dem Aktor zugeführten Fremdkraftbetätigungsmittels zu erfassen, z. B. das Fluid, das einem als Hydraulikzylinder ausgeführten Aktor zugeführt wird oder von ihm abfließt, und daraus eine Information über dessen Position abzuleiten. Bei einem Schrittmotor kann die Anzahl der zugeführten Impulse erfasst werden.

Weiterhin kann als Sensor eine Lichtschranke verwendet werden, die mit einem Lochelement, einer so genannten Kodierscheibe, zusammenwirkt. Hier sind an sich bekannte Mittel zur Feststellung der Bewegungsrichtung vorzusehen, z. B. Schalter oder eine geeignete Form des Lochelements. Derartige Lichtschranken können als sogenannte smarte Lagerungen ausgeführt sein, d. h. räumlich in ein Lager integriert werden.

Eine relativ kostengünstige Möglichkeit wird darin gesehen, eine Anzahl von Sensoren entlang des Wegs der Tür zu verteilen. Sie werden durch ein Element der Tür angesteuert, wenn es sich in ihrer Nähe befindet. Es können beispielsweise mechanische Schalter (z. B. Mikroschalter) oder induktive Näherungsschalter verwendet werden.

Die Bewegung der Tür kann durch geeignete Übersetzungsgetriebe unter- oder übersetzt werden, um den Bewegungsbereich der Tür an den Bewegungsbereich des Sensors anzupassen. Ein Beispiel wäre ein Hebelgetriebe.

Schließlich wird vorgeschlagen, einen Dehnungssensor zur Erfassung der Verformung der Tür als Sensor für ihre Position zu verwenden. Eine geschlossene Tür ist in der Regel weniger verformt als eine geöffnete Tür. Diese Verformung wird durch den Dehnungssensor, der beispielsweise ein Dehnungsmessstreifen sein kann, erfasst.

In der Zeichnung ist ein nachfolgend näher beschriebenes Ausführungsbeispiel der Erfindung dargestellt. Sie zeigt eine erfindungsgemäße Rundballenpresse mit geöffneter Tür in Seitenansicht und schematischer Darstellung.

In der einzigen Figur ist eine Ausführungsform einer Rundballenpresse 10 dargestellt, die einen Rahmen 12 aufweist, der sich auf zwei Rädern 14 abstützt. An der Vorderseite des Rahmens 14 ist eine Deichsel 16 angeordnet, um die Rundballenpresse 10 an einem Traktor anhängen und über ein Feld ziehen zu können. Im Erntebetrieb bewegt sich die Rundballenpresse 10 in der Figur 1 nach rechts. Eine Aufnahmevorrichtung 18 in Form einer Pick-Up dient zur Aufnahme von auf dem Boden liegenden Erntegut, z. B. in einem Schwad abgelegten Heu oder Stroh. Das von der Aufnahmevorrichtung 18 aufgenommene Erntegut wird durch einen Förderrotor 36 dem Einlass 20 eines Ballenpressraums 22 zugeführt und dort spiralförmig zu einem rund-zylindrischen Ballen 24 aufgerollt, gebunden und anschließend auf den Boden abgelegt oder an eine Wickeleinrichtung (nicht gezeigt) überführt.

Die Rundballenpresse 10 weist eine rückwärtige Tür 26 auf, die um eine horizontal und quer zur Fahrtrichtung verlaufende Achse 28 an der Oberseite der Ballenpresse verschwenkbar angelenkt ist. Die Tür 26 ist in der Figur in ihrer Öffnungsposition dargestellt. Sie kann durch einen Aktor 30 zwischen der dargestellten Öffnungsposition und einer Schließposition bewegt werden, in der sie den Ballenpressraum 22 nach hinten verschließt. Sie wird dazu in der Figur um die Achse 28 im Gegenuhrzeigersinn gedreht.

Der Ballenpressraum 22 wird in der dargestellten Ausführungsform durch antreibbare Walzen 34 umschlossen; es handelt sich demnach um eine Rundballenpresse mit festem Presskammervolumen. Es könnte sich genauso gut um eine Rundballenpresse mit variablem Presskammervolumen handeln, dann würde der Ballenpressraum von antreibbaren Riemen oder dgl. umschlossen.

Erfindungsgemäß sind einige Sensoren zur Erfassung der aktuellen Position der Tür 26 vorgesehen. Ein erster Sensor 38 in Form eines Drehpotentiometers erfasst den Drehwinkel der Tür 26 um die Achse 28 an der in Fahrtrichtung rechten Seite der Rundballenpresse 10. Ein weiterer derartiger Sensor (nicht dargestellt) in Form eines Drehpotentiometers erfasst den Drehwinkel 40 der Tür 26 um die Achse 28 an der in Fahrtrichtung linken Seite der Rundballenpresse 10. Ein dritter Sensor 42 in Form eines Ultraschallentfernungsmessers erfasst den Abstand zwischen dem rückwärtigen (in der Schließposition unteren) Ende der Tür 26 und dem Erdboden. Der Sensor 42 beruht vorzugsweise auf einem Laufzeitprinzip. Er könnte auch mit einem als Referenz dienenden Reflektor zusammenwirken, der an einem sich nicht mit der Tür 26 bewegenden Element der Rundballenpresse 10 befestigt ist, z. B. an der Achse oder am rückwärtigen Ende des Ballenpressraums 22.

Der Aktor 30 ist ein doppelt wirkender Hydraulikzylinder, der kolbenseitig am Rahmen 12 und kolbenstangenseitig an der Tür 26 angelenkt ist. In der zur Kolbenkammer des Aktors 30 führenden Leitung ist ein vierter Sensor 44 in Form eines Flusssensors angeordnet. Anhand der Menge des in die Kolbenkammer fließenden oder daraus abfließenden Hydraulikfluids kann eine Information über die Position des Kolbens des Aktors 30 und somit über die Position der Tür 26 gewonnen werden.

Die Sensoren 38, 42 und 44 sind mit einer elektronischen Steuerung 46 verbunden, vorzugsweise über einen Bus oder direkt über elektrische Kabel bzw. Lichtleiter. Die Steuerung 46 kann sich physisch auf der Rundballenpresse 10 oder an Bord eines Traktors oder anderen Zugfahrzeugs befinden, das die Ballenpresse zieht und ihre beweglichen Elemente mit elektrischer und/oder mechanischer und/oder hydraulischer Antriebsleistung versorgt. Die Steuerung 46 kontrolliert eine Ventileinrichtung 48, die ihrerseits hydraulisch durch zwei Leitungen mit den beiden Kammern des Aktors 30 verbunden ist. Weiterhin ist die Steuerung 46 elektrisch mit einer Eingabe- und Anzeigeeinrichtung 50 verbunden, die sich im Sichtbereich des Bedieners im Traktor befindet. Die Eingabe- und Anzeigeeinrichtung 50 ist vorzugsweise ISO-konform und somit durch einen Bus mit der Steuerung 46 verbunden.

Die Arbeitsweise der Rundballenpresse 10 ist folgendermaßen. Beim Aufnehmen von Erntegut, z. b. Heu oder Stroh, entsteht im Ballenpressraum 22 ein Ballen 24 wachsender Größe. Die Tür 26 wird durch ihr eigenes Gewicht in der Schließposition gehalten, wobei beide Kammern des Aktors 30 drucklos gehalten werden. Sobald der Ballen 24 eine gewisse Größe erreicht hat, drückt er die an der Innenseite der Tür 26 gelagerten Walzen 34 nach hinten und oben. Übersteigt die zugehörige Kraft die Gewichtskraft der Tür 26, fängt letztere an, sich um die Achse 28 im Uhrzeigersinn zu drehen. Um eine gewünschte Packungsdichte des Ballens 24 zu erhalten, könnte man in der Ballenbildungsphase auch die Kolbenstangenkammer des Aktors 30 mit einem bestimmten Druck beaufschlagen, um die Tür 26 mit einer größeren Vorspannkraft zu beaufschlagen. Der Druck in der Kolbenstangenkammer des Aktors 30 kann durch den Bediener über die Eingabe- und Anzeigeeinrichtung 50 eingegeben und über die Steuerung 46 und die Ventileinrichtung 48 gesteuert werden.

Sobald sich die Tür 26 bewegt, erhält die Steuerung 46 entsprechende Signale von den Sensoren 38 an beiden Seiten der Rundballenpresse 10. Diese Signale werden als Hinweis, dass der Ballen 24 fertiggestellt ist, aufgefasst und über die Eingabe- und Anzeigeeinrichtung 50 wird eine entsprechende Information an den Bediener gegeben. Er unterbricht dann die Fahrt. In der Zeichnung nicht dargestellte Mittel umwickeln dann den Ballen 24 mit einem Band, Netz oder einer Folie. Weisen die Signale der Sensoren 38 an beiden Seiten der Rundballenpresse 10 auf unterschiedliche Öffnungswinkel 40 an beiden Seiten der Tür 26 hin, was auf einen ungleichmäßigen Ballen hindeutet, wird dieses dem Bediener auf der Eingabe- und Anzeigeeinrichtung 50 signalisiert. Er kann dann im weiteren Arbeitsverlauf entsprechend gegenlenken, damit das Erntegut möglichst mittig in die Aufnahmevorrichtung 18 einläuft.

Nach der Fertigstellung des Ballens 24 ist letzterer auf den Boden oder eine nicht dargestellte Wickeleinrichtung auszuwerfen. Dazu ist die Tür 26 in die Öffnungsposition zu verbringen. Die Öffnung der Tür 26 erfolgt durch den Aktor 30, gesteuert durch die Steuerung 46 und die Ventileinrichtung 48. Die Sensoren 38, 42 und 44 stellen der Steuerung 46 Rückkopplungsinformationen über die aktuelle Position der Tür 26 entlang ihres Wegs zwischen der Schließposition und der Öffnungsposition zur Verfügung. Der Öffnungsvorgang kann somit basierend auf den Positionsinformationen der Sensoren 38, 42 und 46 derart erfolgen, dass die Tür - vorzugsweise basierend auf einer softwaremäßig abgelegten Tabelle - am Anfang der Öffnungsbewegung relativ langsam, im mittleren Bereich relativ schnell und zum Ende der Öffnungsbewegung hin wieder relativ langsam erfolgt. Die Sensoren 38, 42 und 44 stellen eine Redundanz für den Fall, dass einer der Sensoren ausfällt, bereit, und ermöglichen auch eine gegenseitige Funktionskontrolle. Nach dem Auswerfen des Ballens 24 wird die Tür 26 in analoger Weise wieder geschlossen.

Die Erfassung der Position der Tür 26 durch die Sensoren 38, 42 und 44 ermöglicht im Ergebnis eine verbesserte Kontrolle nicht nur der Tür 26, sondern der Rundballenpresse 10 insgesamt.

## Patentansprüche (Patentansprüche für folgende(n) Vertragsstaat(en): AT, BE, BG, CH, LI, CY, CZ, DE, DK, EE, ES, FI, FR, GB, GR, HU, IE, IT, LU, MC, NL, PT, RO, SE, SI, SK, TR)

1. Rundballenpresse (10) mit einem Ballenpressraum (22), einer im rückwärtigen Bereich des Ballenpressraums (22) angeordneten Tür (26), die entlang eines Weges zwischen einer Schließposition, in der sich die Tür (26) entlang der Rückseite des Ballenpressraums (22) erstreckt, und einer Öffnungsposition beweglich ist, in der ein fertiggestellter Ballen (24) aus dem Ballenpressraum (22) auswerfbar ist, und mit einem Sensor (38, 42, 44) zur Bereitstellung einer Information über die Position der Tür (26) entlang des Weges, wobei die Rundballenpresse (10) ein variables Presskammervolumen hat, **dadurch gekennzeichnet, dass** die Steuerung (46) betreibbar ist, die Tür (26) basierend auf dem Signal des Sensors (38, 42, 44) in eine von der Größe des Ballens abhängige Öffnungsposition zu verbringen.

2. Rundballenpresse (10) nach Anspruch 1, **dadurch gekennzeichnet, dass** der Sensor (38, 42, 44) mit einer Steuerung (46) verbunden ist, die außerdem mit einem Aktor (30) zur Bewegung der Tür (26) verbunden ist und betreibbar ist, den Aktor (30) abhängig vom Signalwert des Sensors (38, 42, 44) anzusteuern.

3. Rundballenpresse (10) nach Anspruch 2, **dadurch gekennzeichnet, dass** die Steuerung (46) betreibbar ist, den Aktor (30) mit einer von der Position der Tür (26) abhängigen Geschwindigkeit zu bewegen, wobei vorzugsweise der Anfang und das Ende der Bewegung langsamer als die übrige Bewegung erfolgt.

4. Rundballenpresse (10) nach Anspruch 2 oder 3, **dadurch gekennzeichnet, dass** die Tür (26) derart konfiguriert ist, dass sie durch einen fertiggestellten Ballen (24) bewegbar ist, insbesondere gegen ihre Gewichtskraft oder eine Vorspannung, dass die Steuerung (46) bei einer Bewegung der Tür (26) einen Signalwert abgibt, der einen fertiggestellten Ballen (24) signalisiert, und dass der Signalwert einem Bediener angezeigt wird und/oder zur Aktivierung von Mitteln zur Umhüllung des Ballens (24) und/oder zur Veranlassung einer fremdkraftbetätigten Öffnung der Tür (26) durch den Aktor (30) herangezogen wird.

5. Rundballenpresse (10) nach einem der Ansprüche 2 bis 4, **dadurch gekennzeichnet, dass** die Steuerung (46) beim Schließen der Tür (26) ein Störungssignal abgibt, falls das Signal des Sensors (38, 42, 44) darauf hinweist, dass die Tür (26) nicht in die Schließposition gelangt.

6. Rundballenpresse (10) nach einem der Ansprüche 1 bis 5, **dadurch gekennzeichnet, dass** zwei Sensoren (38) vorhanden sind, die jeweils einer von zwei gegenüberliegenden Seiten der Tür (26) zugeordnet sind.

7. Rundballenpresse (10) nach Anspruch 6, **dadurch gekennzeichnet, dass** die Sensoren (38) mit einer Steuerung (46) verbunden sind, die betreibbar ist, Unterschiede in den Positionen der beiden Seiten der Tür (26) zu erfassen.

8. Rundballenpresse (10) nach Anspruch 7, **dadurch gekennzeichnet, dass** die Steuerung (46) betreibbar ist, anhand der Unterschiede in den Positionen der beiden Seiten der Tür (26) eine Information über die Form des Ballens (24) zu bestimmen.

9. Rundballenpresse (10) nach Anspruch 8, **dadurch gekennzeichnet, dass** die Steuerung (46) betreibbar ist, eine Information über die Form des Ballens (24) auf einer Anzeigeeinrichtung (50) zur Anzeige zu bringen und/oder anhand der Form des Ballens (24) eine sinnvolle Lenkrichtung zu berechnen und einem Bediener anzugeben und/oder eine Lenkeinrichtung entsprechend der berechneten Lenkrichtung anzusteuern.

10. Rundballenpresse (10) nach einem der vorherigen Ansprüche, **dadurch gekennzeichnet, dass** der Sensor (38, 44) eingerichtet ist, den Abstand zwischen einem Bereich der Tür (26) und einem sich nicht mit der Tür (26) bewegenden Bereich der Rundballenpresse (10) zu erfassen.

11. Rundballenpresse (10) nach einem der vorherigen Ansprüche, **dadurch gekennzeichnet, dass** die Tür (26) in vertikaler Richtung zwischen der Schließposition und der Öffnungsposition beweglich ist, und dass der Sensor (42) eingerichtet ist, den Abstand zwischen einem Bereich der Tür (42) und dem Erdboden zu erfassen.

12. Rundballenpresse (10) nach einem der vorherigen Ansprüche, **dadurch gekennzeichnet, dass** der Sensor (42) ein berührungslos arbeitender Entfernungssensor ist.

13. Rundballenpresse (10) nach einem der vorherigen Ansprüche, **dadurch gekennzeichnet, dass** der Sensor (38, 42, 44) analog oder digital arbeitet.

14. Rundballenpresse (10) nach einem der Ansprüche 1 bis 13, **dadurch gekennzeichnet, dass** der Sensor (38, 42) ein Potentiometer und/oder einen Ultraschallsensor und/oder einen Näherungssensor umfasst.

15. Rundballenpresse (10) nach einem der Ansprüche 1 bis 14, **dadurch gekennzeichnet, dass** der Sensor (38) eingerichtet ist, den Winkel (40) der Tür (26) um eine Achse (28) zu erfassen, um die sie sich zwischen der Schließposition und der Öffnungsposition bewegt.

16. Rundballenpresse (10) nach einem Ansprüche 1 bis 15, **dadurch gekennzeichnet, dass** der Sensor (44) eingerichtet ist, die Position eines zu Verstellung der Tür (26) zwischen der Schließposition und der Öffnungsposition eingerichteten Aktors (30) zu erfassen.

17. Rundballenpresse (10) nach Anspruch 16, **dadurch gekennzeichnet, dass** der Sensor im Gehäuse des Aktors angeordnete Elemente umfasst.

18. Rundballenpresse (10) nach Anspruch 16 oder 17, **dadurch gekennzeichnet, dass** der Sensor (44) Einrichtungen umfasst, die dem Aktor zugeführte oder von ihm abfließende Fremdkraftbetätigungsmittel erfassen, z. B. Hydraulikfluid oder elektrische Energie.

19. Rundballenpresse (10) nach einem der Ansprüche 1 bis 18, **dadurch gekennzeichnet, dass** der Sensor eine Lichtschranke umfasst, die mit einem Lochelement zusammenwirkt.

20. Rundballenpresse (10) nach Anspruch 19, **dadurch gekennzeichnet, dass** die Lichtschranke innerhalb eines Lagers der Tür angeordnet ist.

21. Rundballenpresse (10) nach einem der Ansprüche 1 bis 20, **dadurch gekennzeichnet, dass** dem Weg der Tür (26) mehrere Sensoren zugeordnet sind, die jeweils ansprechen, wenn sich ein Element der Tür (26) in ihrer Nähe befindet.

22. Rundballenpresse (10) nach einem der Ansprüche 1 bis 21, **dadurch gekennzeichnet, dass** zwischen der Tür (26) und dem Sensor ein Übersetzungsgetriebe angeordnet ist, beispielsweise eine Hebelanordnung.

23. Rundballenpresse (10) nach einem der vorherigen Ansprüche, **dadurch gekennzeichnet, dass** der Sensor einen Dehnungssensor umfasst, der eine Verformung der Tür (26) erfasst.

## Patentansprüche (Patentansprüche für folgende(n) Vertragsstaat(en): IS,LT,PL)

1. Rundballenpresse (10) mit einem Ballenpressraum (22), einer im rückwärtigen Bereich des Ballenpressraums (22) angeordneten Tür (26), die entlang eines Weges zwischen einer Schließposition, in der sich die Tür (26) entlang der Rückseite des Ballenpressraums (22) erstreckt, und einer Öffnungsposition beweglich ist, in der ein fertiggestellter Ballen (24) aus dem Ballenpressraum (22) auswerfbar ist, und mit einem mit einer Steuerung (46) verbundenen Sensor (38, 42, 44) zur Bereitstellung einer Information über die jeweilige Position der Tür (26) entlang des Weges, **dadurch gekennzeichnet, dass** die Steuerung (46) außerdem mit einem Aktor (30) zur Bewegung der Tür (26) verbunden ist und betreibbar ist, den Aktor (30) abhängig vom Signalwert des Sensors (38, 42, 44) in der Weise anzusteuern, dass sich der Aktor (30) mit einer Geschwindigkeit bewegt, die von der jeweiligen Position der Tür abhängt.

2. Rundballenpresse (10) nach Anspruch 1, **dadurch gekennzeichnet, dass** die Steuerung (46) betreibbar ist, den Anfang und das Ende der Bewegung der Tür (26) langsamer als die übrige Bewegung erfolgen zu lassen.

3. Rundballenpresse (10) nach Anspruch 1 oder 2, **dadurch gekennzeichnet, dass** die Tür (26) derart konfiguriert ist, dass sie durch einen fertiggestellten Ballen (24) bewegbar ist, insbesondere gegen ihre Gewichtskraft oder eine Vorspannung, dass die Steuerung (46) bei einer Bewegung der Tür (26) einen Signalwert abgibt, der einen fertiggestellten Ballen (24) signalisiert, und dass der Signalwert einem Bediener angezeigt wird und/oder zur Aktivierung von Mitteln zur Umhüllung des Ballens (24) und/oder zur Veranlassung einer fremdkraftbetätigten Öffnung der Tür (26) durch den Aktor (30) herangezogen wird.

4. Rundballenpresse (10) nach einem der Ansprüche 1 bis 3, **dadurch gekennzeichnet, dass** die Steuerung (46) beim Schließen der Tür (26) ein Störungssignal abgibt, falls das Signal des Sensors (38, 42, 44) darauf hinweist, dass die Tür (26) nicht in die Schließposition gelangt.

5. Rundballenpresse (10) nach einem der Ansprüche 1 bis 4, **dadurch gekennzeichnet, dass** sie ein variables Presskammervolumen hat, und dass die Steuerung (46) betreibbar ist, die Tür (26) basierend auf dem Signal des Sensors (38, 42, 44) in eine von einer bekannten Größe des Ballens abhängige Öffnungsposition zu verbringen.

6. Rundballenpresse (10) nach einem der Ansprüche 1 bis 5, **dadurch gekennzeichnet, dass** zwei Sensoren (38) vorhanden sind, die jeweils einer von zwei gegenüberliegenden Seiten der Tür (26) zugeordnet sind.

7. Rundballenpresse (10) nach Anspruch 6, **dadurch gekennzeichnet, dass** die Sensoren (38) mit einer Steuerung (46) verbunden sind, die betreibbar ist, Unterschiede in den Positionen der beiden Seiten der Tür (26) zu erfassen.

8. Rundballenpresse (10) nach Anspruch 7, **dadurch gekennzeichnet, dass** die Steuerung (46) betreibbar ist, anhand der Unterschiede in den Positionen der beiden Seiten der Tür (26) eine Information über die Form des Ballens (24) zu bestimmen.

9. Rundballenpresse (10) nach Anspruch 8, **dadurch gekennzeichnet, dass** die Steuerung (46) betreibbar ist, eine Information über die Form des Ballens (24) auf einer Anzeigeeinrichtung (50) zur Anzeige zu bringen und/oder anhand der Form des Ballens (24) eine sinnvolle Lenkrichtung zu berechnen und einem Bediener anzugeben und/oder eine Lenkeinrichtung entsprechend der berechneten Lenkrichtung anzusteuern.

10. Rundballenpresse (10) nach einem der vorherigen Ansprüche, **dadurch gekennzeichnet, dass** der Sensor (38, 44) eingerichtet ist, den Abstand zwischen einem Bereich der Tür (26) und einem sich nicht mit der Tür (26) bewegenden Bereich der Rundballenpresse (10) zu erfassen.

11. Rundballenpresse (10) nach einem der vorherigen Ansprüche, **dadurch gekennzeichnet, dass** die Tür (26) in vertikaler Richtung zwischen der Schließposition und der Öffnungsposition beweglich ist, und dass der Sensor (42) eingerichtet ist, den Abstand zwischen einem Bereich der Tür (42) und dem Erdboden zu erfassen.

12. Rundballenpresse (10) nach einem der vorherigen Ansprüche, **dadurch gekennzeichnet, dass** der Sensor (42) ein berührungslos arbeitender Entfernungssensor ist.

13. Rundballenpresse (10) nach einem der vorherigen Ansprüche, **dadurch gekennzeichnet, dass** der Sensor (38,42,44) analog oder digital arbeitet.

14. Rundballenpresse (10) nach einem der Ansprüche 1 bis 13, **dadurch gekennzeichnet, dass** der Sensor (38, 42) ein Potentiometer und/oder einen Ultraschallsensor und/oder einen Näherungssensor umfasst.

15. Rundballenpresse (10) nach einem der Ansprüche 1 bis 14, **dadurch gekennzeichnet, dass** der Sensor (38) eingerichtet ist, den Winkel (40) der Tür (26) um eine Achse (28) zu erfassen, um die sie sich zwischen der Schließposition und der Öffnungsposition bewegt.

16. Rundballenpresse (10) nach einem Ansprüche 1 bis 15, **dadurch gekennzeichnet, dass** der Sensor (44) eingerichtet ist, die Position eines zu Verstellung der Tür (26) zwischen der Schließposition und der Öffnungsposition eingerichteten Aktors (30) zu erfassen.

17. Rundballenpresse (10) nach Anspruch 16, **dadurch gekennzeichnet, dass** der Sensor im Gehäuse des Aktors angeordnete Elemente umfasst.

18. Rundballenpresse (10) nach Anspruch 16 oder 17, **dadurch gekennzeichnet, dass** der Sensor (44) Einrichtungen umfasst, die dem Aktor zugeführte oder von ihm abfließende Fremdkraftbetätigungsmittel erfassen, z. B. Hydraulikfluid oder elektrische Energie.

19. Rundballenpresse (10) nach einem der Ansprüche 1 bis 18, **dadurch gekennzeichnet, dass** der Sensor eine Lichtschranke umfasst, die mit einem Lochelement zusammenwirkt.

20. Rundballenpresse (10) nach Anspruch 19, **dadurch gekennzeichnet, dass** die Lichtschranke innerhalb eines Lagers der Tür angeordnet ist.

21. Rundballenpresse (10) nach einem der Ansprüche 1 bis 20, **dadurch gekennzeichnet, dass** dem Weg der Tür (26) mehrere Sensoren zugeordnet sind, die jeweils ansprechen, wenn sich ein Element der Tür (26) in ihrer Nähe befindet.

22. Rundballenpresse (10) nach einem der Ansprüche 1 bis 21, **dadurch gekennzeichnet, dass** zwischen der Tür (26) und dem Sensor ein Übersetzungsgetriebe angeordnet ist, beispielsweise eine Hebelanordnung.

23. Rundballenpresse (10) nach einem der vorherigen Ansprüche, **dadurch gekennzeichnet, dass** der Sensor einen Dehnungssensor umfasst, der eine Verformung der Tür (26) erfasst.

## Claims (Claims for the following Contracting State(s): AT, BE, BG, CH, LI, CY, CZ, DE, DK, EE, ES, FI, FR, GB, GR, HU, IE, IT, LU, MC, NL, PT, RO, SE, SI, SK, TR)

1. Rotobaler (10) having a bale pressing chamber (22), a door (26) which is arranged in the rear region of the bale pressing chamber (22) and can move along a path between a closed position, in which the door (26) extends along the rear side of the bale pressing chamber (22), and an open position in which a finished bale (24) can be ejected from the bale pressing chamber (22), and having a sensor (38, 42, 44) for making available information about the position of the door (26) along the path, wherein the rotobaler (10) has a variable pressing chamber volume, **characterized in that** the controller (46) can be operated to move the door (26), on the basis of the signal of the sensor (38, 42, 44), into an open position which is dependent on the size of the bale.

2. Rotobaler (10) according to Claim 1, **characterized in that** the sensor (38, 42, 44) is connected to a controller (46) which is also connected to an actuator (30) for moving the door (26) and can be operated to activate the actuator (30) as a function of the signal value of the sensor (38, 42, 44).

3. Rotobaler (10) according to Claim 2, **characterized in that** the controller (46) can be operated to move the actuator (30) at a speed which is dependent on the position of the door (26), wherein the start and the end of the movement preferably take place more slowly than the rest of the movement.

4. Rotobaler (10) according to Claim 2 or 3, **characterized in that** the door (26) is configured in such a way that it can be moved by a finished bale (24), in particular counter to its weight force or to a prestress, **in that** during a movement of the door (26) the controller (46) outputs a signal value which signals a finished bale (24), and **in that** the signal value is indicated to an operator/or is used to actuate means for wrapping the bale (24) and/or to bring about extraneous-force-activated opening of the door (26) by the actuator (30).

5. Rotobaler (10) according to Claims 2 to 4, **characterized in that** when the door (26) closes the controller (46) outputs a fault signal if the signal of the sensor (38, 42, 44) indicates that the door (26) does not move into the closed position.

6. Rotobaler (10) according to one of Claims 1 to 5, **characterized in that** two sensors (38) are present which are each assigned to one of two opposite sides of the door (26).

7. Rotobaler (10) according to Claim 6, **characterized in that** the sensors (38) are connected to a controller (46) which can be operated to detect differences in the positions of the two sides of the door (26).

8. Rotobaler (10) according to Claim 7, **characterized in that** the controller (46) can be operated to determine information about the shape of the bale (24) on the basis of the differences in the positions of the two sides of the door (26).

9. Rotobaler (10) according to Claim 8, **characterized in that** the controller (46) can be operated to display information about the shape of the bale (24) on a display device (50) and/or to calculate an appropriate steering direction on the basis of the shape of the bale (24) and to indicate said steering direction to an operator and/or to activate a steering device in accordance with the calculated steering direction.

10. Rotobaler (10) according to one of the preceding claims, **characterized in that** the sensor (38, 44) is configured to detect the distance between a region of the door (26) and a region of the rotobaler (10) which does not move with the door (26).

11. Rotobaler (10) according to one of the preceding claims, **characterized in that** the door (26) can move in a vertical direction between the closed position and the open position and **in that** the sensor (42) is configured to detect the distance between a region of the door (42) and the ground.

12. Rotobaler (10) according to one of the preceding claims, **characterized in that** the sensor (42) is a distance sensor which operates in a contactless fashion.

13. Rotobaler (10) according to one of the preceding claims, **characterized in that** the sensor (38, 42, 44) operates in an analogue or digital fashion.

14. Rotobaler (10) according to one of Claims 1 to 13, **characterized in that** the sensor (38, 42) comprises a potentiometer and/or an ultrasonic sensor and/or a proximity sensor.

15. Rotobaler (10) according to one of Claims 1 to 14, **characterized in that** the sensor (38) is configured to detect the angle (40) of the door (26) about an axis (28) about which it moves between the closed position and the open position.

16. Rotobaler (10) according to one of Claims 1 to 15, **characterized in that** the sensor (44) is configured to detect the position of an actuator (30) which is configured to adjust the door (26) between the closed position and the open position.

17. Rotobaler (10) according to Claim 16, **characterized in that** the sensor comprises elements arranged in the housing of the actuator.

18. Rotobaler (10) according to Claim 16 or 17, **characterized in that** the sensor (44) comprises devices which detect extraneous-force-activation media, for example hydraulic fluid or electrical energy, which are fed to the actuator or flow away from it.

19. Rotobaler (10) according to one of Claims 1 to 18, **characterized in that** the sensor comprises a photoelectric barrier which interacts with a perforated element.

20. Rotobaler (10) according to Claim 19, **characterized in that** the photoelectric barrier is arranged within a bearing of the door.

21. Rotobaler (10) according to one of Claims 1 to 20, **characterized in that** the path of the door (26) is assigned a plurality of sensors which each respond if an element of the door (26) is located in their proximity.

22. Rotobaler (10) according to one of Claims 1 to 21, **characterized in that** transmission gearing, for example a lever arrangement, is arranged between the door (26) and the sensor.

23. Rotobaler (10) according to one of the preceding claims, **characterized in that** the sensor comprises a strain sensor which detects deformation of the door (26).

## Claims (Claims for the following Contracting State(s): IS, LT, PL)

1. Rotobaler (10) having a bale pressing chamber (22), a door (26) which is arranged in the rear region of the bale pressing chamber (22) and can move along a path between a closed position, in which the door (26) extends along the rear side of the bale pressing chamber (22), and an open position, in which a finished bale (24) can be ejected from the bale pressing chamber (22), and having a sensor (38, 42, 44) which is connected to a controller (46) and has the purpose of making available information about the respective position of the door (26) along the path, **characterized in that** the controller (46) is also connected to an actuator (30) for moving the door (26) and can be operated to activate the actuator (30) as a function of the signal value of the sensor (38, 42, 44) in such a way that the actuator (30) moves at a speed which depends on the respective position of the door.

2. Rotobaler (10) according to Claim 1, **characterized in that** the controller (46) can be operated to make the start and the end of the movement of the door (26) occur more slowly than the rest of the movement.

3. Rotobaler (10) according to Claim 1 or 2, **characterized in that** the door (26) is configured in such a way that it can be moved by a finished bale (24), in particular counter to its weight force or to a prestress, **in that** during a movement of the door (26) the controller (46) outputs a signal value which signals a finished bale (24), and **in that** the signal value is indicated to an operator/or is used to actuate means for wrapping the bale (24) and/or to bring about extraneous-force-activated opening of the door (26) by the actuator (30).

4. Rotobaler (10) according to one of Claims 1 to 3, **characterized in that** when the door (26) closes the controller (46) outputs a fault signal if the signal of the sensor (38, 42, 44) indicates that the door (26) does not move into the closed position.

5. Rotobaler (10) according to one of Claims 1 to 4, **characterized in that** said rotobaler (10) has a variable pressing chamber volume, and **in that** the controller (46) can be operated to move the door (26), on the basis of the signal of the sensor (38, 42, 44) into an open position which is dependent on a known size of the bale.

6. Rotobaler (10) according to one of Claims 1 to 5, **characterized in that** two sensors (38) are present which are each assigned to one of two opposite sides of the door (26).

7. Rotobaler (10) according to Claim 6, **characterized in that** the sensors (38) are connected to a controller (46) which can be operated to detect differences in the positions of the two sides of the door (26).

8. Rotobaler (10) according to Claim 7, **characterized in that** the controller (46) can be operated to determine information about the shape of the bale (24) on the basis of the differences in the positions of the two sides of the door (26).

9. Rotobaler (10) according to Claim 8, **characterized in that** the controller (46) can be operated to display information about the shape of the bale (24) on a display device (50) and/or to calculate an appropriate steering direction on the basis of the shape of the bale (24) and to indicate said steering direction to an operator and/or to activate a steering device in accordance with the calculated steering direction.

10. Rotobaler (10) according to one of the preceding claims, **characterized in that** the sensor (38, 44) is configured to detect the distance between a region of the door (26) and a region of the rotobaler (10) which does not move with the door (26).

11. Rotobaler (10) according to one of the preceding claims, **characterized in that** the door (26) can move in a vertical direction between the closed position and the open position and **in that** the sensor (42) is configured to detect the distance between a region of the door (42) and the ground.

12. Rotobaler (10) according to one of the preceding claims, **characterized in that** the sensor (42) is a distance sensor which operates in a contactless fashion.

13. Rotobaler (10) according to one of the preceding claims, **characterized in that** the sensor (38, 42, 44) operates in an analogue or digital fashion.

14. Rotobaler (10) according to one of Claims 1 to 13, **characterized in that** the sensor (38, 42) comprises a potentiometer and/or an ultrasonic sensor and/or a proximity sensor.

15. Rotobaler (10) according to one of Claims 1 to 14, **characterized in that** the sensor (38) is configured to detect the angle (40) of the door (26) about an axis (28) about which it moves between the closed position and the open position.

16. Rotobaler (10) according to one of Claims 1 to 15, **characterized in that** the sensor (44) is configured to detect the position of an actuator (30) which is configured to adjust the door (26) between the closed position and the open position.

17. Rotobaler (10) according to Claim 16, **characterized in that** the sensor comprises elements arranged in the housing of the actuator.

18. Rotobaler (10) according to Claim 16 or 17, **characterized in that** the sensor (44) comprises devices which detect extraneous-force-activation media, for example hydraulic fluid or electrical energy, which are fed to the actuator or flow away from it.

19. Rotobaler (10) according to one of Claims 1 to 18, **characterized in that** the sensor comprises a photoelectric barrier which interacts with a perforated element.

20. Rotobaler (10) according to Claim 19, **characterized in that** the photoelectric barrier is arranged within a bearing of the door.

21. Rotobaler (10) according to one of Claims 1 to 20, **characterized in that** the path of the door (26) is assigned a plurality of sensors which each respond if an element of the door (26) is located in their proximity.

22. Rotobaler (10) according to one of Claims 1 to 21, **characterized in that** transmission gearing, for example a lever arrangement, is arranged between the door (26) and the sensor.

23. Rotobaler (10) according to one of the preceding claims, **characterized in that** the sensor comprises a strain sensor which detects deformation of the door (26).

## Revendications (Revendications pour l'(les) Etat(s) contractant(s) suivant(s): AT, BE, BG, CH, LI, CY, CZ, DE, DK, EE, ES, FI, FR, GB, GR, HU, IE, IT, LU, MC, NL, PT, RO, SE, SI, SK, TR)

1. Presse (10) à ballots ronds dotée d'un espace (22) de pressage de ballots, d'une porte (26) disposée dans une partie arrière de l'espace (22) de pressage de ballots et qui peut être déplacée sur un parcours entre une position de fermeture dans laquelle la porte (26) s'étend le long du côté arrière de l'espace (22) de pressage de ballots et une position d'ouverture dans laquelle un ballot terminé (24) peut être expulsé hors de l'espace (22) de pressage de ballots, et d'un capteur (38, 42, 44) qui délivre une information concernant la position de la porte (26) sur le parcours, la presse (10) à ballots ayant un volume variable de chambre de pressage,
**caractérisée en ce que**
la commande (46) peut être utilisée pour amener sur la base du signal du capteur (38, 42, 44) la porte (26) dans une position d'ouverture qui dépend de la taille du ballot.

2. Presse (10) à ballots ronds selon la revendication 1, **caractérisée en ce que** le capteur (38, 42, 44) est raccordé à une commande (46) qui est en outre reliée à un actionneur (30) qui déplace la porte (26) et qui peut être utilisé pour commander l'actionneur (30) en fonction de la valeur du signal du capteur (38, 42, 44).

3. Presse (10) à ballots ronds selon la revendication 2, **caractérisée en ce que** la commande (46) peut être utilisée pour déplacer l'actionneur (30) à une vitesse qui dépend de la position de la porte (26), le début et la fin du déplacement s'effectuant de préférence plus lentement que le reste du déplacement.

4. Presse (10) à ballots ronds selon les revendications 2 ou 3, **caractérisée en ce que** la porte (26) est configurée de telle sorte qu'elle puisse être déplacée par un ballot terminé (24), en particulier en opposition à la force de son poids ou à une précontrainte, **en ce que** la commande (46) délivre en cas de déplacement de la porte (26) un signal dont la valeur signale un ballot terminé (24) et **en ce que** la valeur du signal est affichée à un opérateur et/ou intervient pour activer des moyens d'enveloppement du ballot (24) et/ou pour lancer une ouverture sous l'action d'une force extérieure de la porte (26) par l'actionneur (30).

5. Presse (10) à ballots ronds selon l'une des revendications 2 à 4, **caractérisée en ce qu'**en cas de fermeture de la porte (26), la commande (46) délivre un signal de perturbation au cas où le signal du capteur (38, 42, 44) indique que la porte (26) ne se rend pas dans sa position de fermeture.

6. Presse (10) à ballots ronds selon l'une des revendications 1 à 5, **caractérisée en ce qu'**elle présente deux capteurs (38) qui sont disposés chacun sur un des deux côtés opposés de la porte (26).

7. Presse (10) à ballots ronds selon la revendication 6, **caractérisée en ce que** les capteurs (38) sont raccordés à une commande (46) qui peut être utilisée pour saisir des différences de positions des deux côtés de la porte (26).

8. Presse (10) à ballots ronds selon la revendication 7, **caractérisée en ce que** la commande (46) peut être utilisée pour déterminer une information concernant la forme du ballot (24) à l'aide des différences de positions des deux côtés de la porte (26).

9. Presse (10) à ballots ronds selon la revendication 8, **caractérisée en ce que** la commande (46) peut être utilisée pour afficher sur un dispositif d'affichage (50) une information concernant la forme du ballot (24) et/ou pour, à l'aide de la forme du ballot (24), calculer une direction de braquage utile et l'indiquer à une opérateur et/ou pour commander un dispositif de braquage en correspondance à la direction de braquage calculée.

10. Presse (10) à ballots ronds selon l'une des revendications précédentes, **caractérisée en ce que** le capteur (38, 44) est conçu pour saisir la distance entre une partie de la porte (26) et une partie de la presse (10) à ballots ronds qui ne se déplace pas avec la porte (26).

11. Presse (10) à ballots ronds selon l'une des revendications précédentes, **caractérisée en ce que** la porte (26) peut être déplacée dans la direction verticale entre la position de fermeture et la position d'ouverture et **en ce que** le capteur (42) est conçu pour saisir la distance entre une partie de la porte (42) et le sol.

12. Presse (10) à ballots ronds selon l'une des revendications précédentes, **caractérisée en ce que** le capteur (42) est un capteur de distance travaillant sans contact.

13. Presse (10) à ballots ronds selon l'une des revendications précédentes, **caractérisée en ce que** le capteur (38, 42, 44) travaille de manière analogique ou de manière numérique.

14. Presse (10) à ballots ronds selon l'une des revendications 1 à 13, **caractérisée en ce que** le capteur (38, 42) comporte un potentiomètre, un capteur à ultrasons et/ou un capteur de proximité.

15. Presse (10) à ballots ronds selon l'une des revendications 1 à 14, **caractérisée en ce que** le capteur (38) est conçu pour saisir l'angle (40) de la porte (26) autour d'un axe (28) autour duquel elle se déplace entre sa position de fermeture et sa position d'ouverture.

16. Presse (10) à ballots ronds selon l'une des revendications 1 à 15, **caractérisée en ce que** le capteur (44) est conçu pour saisir la position d'un actionneur (30) conçu pour déplacer la porte (26) entre la position de fermeture et la position d'ouverture.

17. Presse (10) à ballots ronds selon la revendication 16, **caractérisée en ce que** le capteur comporte des éléments disposés dans le boîtier de l'actionneur.

18. Presse (10) à ballots ronds selon les revendications 16 ou 17, **caractérisée en ce que** le capteur (44) comporte des dispositifs qui saisissent des moyens d'actionnement par force extérieure apportés à l'actionneur ou sortant de lui, par exemple un fluide hydraulique de l'énergie électrique.

19. Presse (10) à ballots ronds selon l'une des revendications 1 à 18, **caractérisée en ce que** le capteur comporte une barrière lumineuse qui coopère avec un élément perforé.

20. Presse (10) à ballots ronds selon la revendication 19, **caractérisée en ce que** la barrière lumineuse est disposée à l'intérieur d'un palier de la porte.

21. Presse (10) à ballots ronds selon l'une des revendications 1 à 20, **caractérisée en ce que** plusieurs capteurs qui réagissent chacun lorsqu'un élément de la porte (26) se trouve à leur proximité sont associés au parcours de la porte (26).

22. Presse (10) à ballots ronds selon l'une des revendications 1 à 21, **caractérisée en ce qu'**une transmission de conversion, par exemple un ensemble de levier, est disposée entre la porte (26) et le capteur.

23. Presse (10) à ballots ronds selon l'une des revendications précédentes, **caractérisée en ce que** le capteur comporte un capteur d'allongement qui saisit une déformation de la porte (26).

## Revendications (Revendications pour l'(les) Etat(s) contractant(s) suivant(s): IS, LT, PL)

1. Presse (10) à ballots ronds dotée d'un espace (22) de pressage de ballots, d'une porte (26) disposée dans la partie arrière de l'espace (22) de pressage de ballots, qui peut se déplacer sur un parcours situé entre une position de fermeture dans laquelle la porte (26) s'étend le long du côté arrière de l'espace (22) de pressage de ballots et une position d'ouverture dans laquelle le ballot (24) terminé peut être expulsé hors de l'espace (22) de pressage de ballots, et d'un capteur (38, 42, 44) relié à une commande (46) et qui délivre une information concernant la position de la porte (26) sur le parcours,
**caractérisée en ce que**
la commande (26) est de plus raccordée à un actionneur (30) qui déplace la porte (26) et peut être utilisée pour commander l'actionneur (30) en fonction de la valeur du signal du capteur (38, 42, 44), de telle sorte que l'actionneur (30) se déplace à une vitesse qui dépend de la position particulière de la porte.

2. Presse (10) à ballots ronds selon la revendication 1, **caractérisée en ce que** la commande (46) peut être utilisée pour réaliser le début et la fin du déplacement de la porte (26) plus lentement que le reste de son déplacement.

3. Presse (10) à ballots ronds selon les revendications 1 ou 2, **caractérisée en ce que** la porte (26) est configurée de telle sorte qu'elle puisse être déplacée par un ballot (24) terminé, en particulier en opposition à la force de son poids ou à une précontrainte, **en ce que** lors d'un déplacement de la porte (26), la commande (46) délivre un signal dont la valeur signale un ballot (24) terminé et **en ce que** la valeur du signal est affichée à un opérateur et/ou intervient pour activer des moyens d'enveloppement du ballot (24) et/ou pour faire lancer une ouverture de la porte (26) par l'actionneur (30) sous l'action d'une force extérieure.

4. Presse (10) à ballots ronds selon l'une des revendications 1 à 3, **caractérisée en ce qu'**en cas de fermeture de la porte (26), la commande (46) délivre un signal de perturbation au cas où le signal du capteur (38, 42, 44) indique que la porte (26) ne se rend pas dans sa position de fermeture.

5. Presse (10) à ballots ronds selon l'une des revendications 1 à 4, **caractérisée en ce qu'**elle présente un volume variable de chambre de pressage et **en ce que** la commande (46) peut être utilisée pour amener la porte (26), sur la base du signal du capteur (38, 42, 44), dans une position d'ouverture qui dépend de la taille connue du ballot.

6. Presse (10) à ballots ronds selon l'une des revendications 1 à 5, **caractérisée en ce qu'**elle présente deux capteurs (38) qui sont disposés chacun sur un des deux côtés opposés de la porte (26).

7. Presse (10) à ballots ronds selon la revendication 6, **caractérisée en ce que** les capteurs (38) sont raccordés à une commande (46) qui peut être utilisée pour saisir des différences de positions des deux côtés de la porte (26).

8. Presse (10) à ballots ronds selon la revendication 7, **caractérisée en ce que** la commande (46) peut être utilisée pour déterminer une information concernant la forme du ballot (24) à l'aide des différences de positions des deux côtés de la porte (26).

9. Presse (10) à ballots ronds selon la revendication 8, **caractérisée en ce que** la commande (46) peut être utilisée pour afficher sur un dispositif d'affichage (50) une information concernant la forme du ballot (24) et/ou pour, à l'aide de la forme du ballot (24), calculer une direction de braquage utile et l'indiquer à une opérateur et/ou pour commander un dispositif de braquage en correspondance à la direction de braquage calculée.

10. Presse (10) à ballots ronds selon l'une des revendications précédentes, **caractérisée en ce que** le capteur (38, 44) est conçu pour saisir la distance entre une partie de la porte (26) et une partie de la presse (10) à ballots ronds qui ne se déplace pas avec la porte (26).

11. Presse (10) à ballots ronds selon l'une des revendications précédentes, **caractérisée en ce que** la porte (26) peut être déplacée dans la direction verticale entre la position de fermeture et la position d'ouverture et **en ce que** le capteur (42) est conçu pour saisir la distance entre une partie de la porte (42) et le sol.

12. Presse (10) à ballots ronds selon l'une des revendications précédentes, **caractérisée en ce que** le capteur (42) est un capteur de distance travaillant sans contact.

13. Presse (10) à ballots ronds selon l'une des revendications précédentes, **caractérisée en ce que** le capteur (38, 42, 44) travaille de manière analogique ou de manière numérique.

14. Presse (10) à ballots ronds selon l'une des revendications 1 à 13, **caractérisée en ce que** le capteur (38, 42) comporte un potentiomètre, un capteur à ultrasons et/ou un capteur de proximité.

15. Presse (10) à ballots ronds selon l'une des revendications 1 à 14, **caractérisée en ce que** le capteur (38) est conçu pour saisir l'angle (40) de la porte (26) autour d'un axe (28) autour duquel elle se déplace entre sa position de fermeture et sa position d'ouverture.

16. Presse (10) à ballots ronds selon l'une des revendications 1 à 15, **caractérisée en ce que** le capteur (44) est conçu pour saisir la position d'un actionneur (30) conçu pour déplacer la porte (26) entre la position de fermeture et la position d'ouverture.

17. Presse (10) à ballots ronds selon la revendication 16, **caractérisée en ce que** le capteur comporte des éléments disposés dans le boîtier de l'actionneur.

18. Presse (10) à ballots ronds selon les revendications 16 ou 17, **caractérisée en ce que** le capteur (44) comporte des dispositifs qui saisissent des moyens d'actionnement par force extérieure apportés à l'actionneur ou sortant de lui, par exemple un fluide hydraulique de l'énergie électrique.

19. Presse (10) à ballots ronds selon l'une des revendications 1 à 18, **caractérisée en ce que** le capteur comporte une barrière lumineuse qui coopère avec un élément perforé.

20. Presse (10) à ballots ronds selon la revendication 19, **caractérisée en ce que** la barrière lumineuse est disposée à l'intérieur d'un palier de la porte.

21. Presse (10) à ballots ronds selon l'une des revendications 1 à 20, **caractérisée en ce que** plusieurs capteurs qui réagissent chacun lorsqu'un élément de la porte (26) se trouve à leur proximité sont associés au parcours de la porte (26).

22. Presse (10) à ballots ronds selon l'une des revendications 1 à 21, **caractérisée en ce qu'**une transmission de conversion, par exemple un ensemble de levier, est disposée entre la porte (26) et le capteur.

23. Presse (10) à ballots ronds selon l'une des revendications précédentes, **caractérisée en ce que** le capteur comporte un capteur d'allongement qui saisit une déformation de la porte (26).
